# EUROPEAN PATENT APPLICATION

(11) **EP 4 821 889 A1**
(43) Date of publication of application: **14.10.2026**
(21) Application number: 24900477.1
(22) Date of filing: 25.11.2024
(51) Int. Cl.: C01F 11/18, C04B 14/28, C04B 28/02

(54) **CALCIUM-BASED CARBONIC ACID COMPOUND AND INORGANIC MOLDED BODY**

(30) Priority: 05.12.2023 JP 2023205031; 22.12.2023 JP 2023217174
(71) Applicant: Konoshima Chemical Co., Ltd., Osaka-shi, Osaka 541-0042 (JP)
(72) Inventor: MATSUI,Seiji, Mitoyo-shi, Kagawa 769-1103 (JP); TAKENAKA,Hiroki, Mitoyo-shi, Kagawa 769-1103 (JP); SATOMURA,Hideaki, Mitoyo-shi, Kagawa 769-1103 (JP)
(74) Representative: Parker, Andrew James
(86) International application number: PCT/JP2024/041593
(87) International publication number: WO 2025/121183

(57) **Abstract**

Provided are a calcium-based carbonate compound whose shape is controlled so as to have a high aspect ratio, and an inorganic molded body. A calcium-based carbonate compound, in which the content of phosphorus atoms is 1,000 ppm or more and 15,000 ppm or less, the content of sulfur atoms is 2,000 ppm or less, and the aspect ratio of the average major diameter to the average minor diameter is 6 or more and 19 or less.

## Description

### TECHNICAL FIELD

The present invention relates to a calcium-based carbonate compound and an inorganic molded body.

### BACKGROUND ART

The inorganic molded body is a molded body mainly constituted by inorganic substances such as a hydraulic material and a siliceous material, having characteristics such as fire resistance, light weight, high strength, and workability, and therefore is widely used for an outer wall material of a house or the like, a roof base material, an eave soffit material, and the like. Calcium carbonate may be blended in an inorganic molded body for the purpose of reducing the amount of carbon dioxide discharged and improving fire resistance.

On the other hand, due to the recent increase in environmental awareness, attempts have been made to reuse by-product materials and by-product energy such as waste material, exhaust gas, and waste heat secondarily generated in industrial processes. In the production of calcium carbonate, a technique has been proposed in which carbon dioxide in exhaust gas is utilized to fix the carbon dioxide, and the calcium carbonate is blended in a building component (WO 2021/256484).

### PRIOR ART DOCUMENTS

### PATENT DOCUMENT

Patent Document 1: WO 2021/256484

### SUMMARY OF THE INVENTION

### PROBLEMS TO BE SOLVED BY THE INVENTION

For the purpose of enhancing the function of an object such as an inorganic molded body to be blended with calcium carbonate, shape control of calcium carbonate, particularly, higher aspect ratio is required.

An object of the present invention is to provide a calcium-based carbonate compound whose shape is controlled so as to have a high aspect ratio, and an inorganic molded body.

### MEANS FOR SOLVING THE PROBLEMS

As a result of intensive studies, the present inventor has found that the above problem can be solved by the following configuration, and has completed the present invention.

The present invention relates to, in one embodiment, a calcium-based carbonate compound, in which
the content of phosphorus atoms is 1,000 ppm or more and 15,000 ppm or less,
the content of sulfur atoms is 2,000 ppm or less, and
the aspect ratio of the average major diameter to the average minor diameter is 6 or more and 19 or less.

As a result of examination by the present inventors, it has been newly found that, as a factor of acicular or rod-like crystal growth (hereinafter, also collectively referred to as "acicular crystal growth or the like") for achieving a high aspect ratio in crystal growth of the calcium-based carbonate compound, a phosphorus atom acts as a promoter of acicular crystal growth or the like, while a sulfur atom acts as an inhibitor of acicular crystal growth or the like. The present inventors have developed this novel finding to complete the present invention. Since the content of phosphorus atoms and sulfur atoms in the calcium-based carbonate compound is within a specific range, the shape can be highly controlled, and a high aspect ratio can be provided.

In the present specification, the "calcium-based carbonate compound" is a compound containing calcium carbonate as a main component, and is a concept that allows the inclusion or coexistence of other subcomponents that can be incorporated in the production process and the like. The content of calcium carbonate in the calcium-based carbonate compound is preferably 90 mass% or more. As the method for measuring the content percentage of calcium carbonate in the calcium-based carbonate compound, a disodium ethylenediaminetetraacetate titration method can be suitably employed.

### <Disodium ethylenediaminetetraacetate titration method>

As a sample, 1 g of a calcium-based carbonate compound (dried at 105°C for 2 hours) is weighed and suspended in 50 mL of water. To the suspension, 10 mL of hydrochloric acid (a liquid obtained by mixing concentrated hydrochloric acid and water at a volume ratio of 1 : 1) is added, followed by heating for dissolution. After cooling, the solution is transferred to a 250 mL volumetric flask, and water is added to make up the equivalent volume. From this, an aliquot of 5.00 mL is taken, followed by addition of water such that the total amount of the liquid is about 50 mL. To this, 5 mL of a buffer solution (a solution prepared by dissolving 500 g of potassium hydroxide in water to make 1,000 mL) is added, and a commercially available diluted powder of DOTITE NN is further added, followed by titration with a titration reagent (a solution prepared by dissolving about 3.8 g of disodium ethylenediaminetetraacetate in water to make 1,000 mL). The titration is ended at the time when the color of the liquid changes from red to blue. The content (%) of calcium carbonate is calculated by the following formula. [Math. 1] ${CaCO}_{3} \left(%\right) = \frac{0.00100089 \times f \times V}{W} \times 100$

(In the formula, f is a factor of the titration reagent. The factor is determined by standardization with a titration reagent using a BT indicator. V is the consumption (mL) of the titration reagent. W is the collected amount of the sample (0.02 g of calcium-based carbonate compound).)

In one embodiment, the content of silicon atoms is preferably 5,000 ppm or less. The present inventors have found that a silicon atom is an inhibitor of acicular crystal growth or the like. By adjusting the content of silicon atoms within a specific range, the shape controllability of the calcium-based carbonate compound can be further improved, efficiently achieving a high aspect ratio.

In one embodiment, the total content of phosphorus atoms, silicon atoms and sulfur atoms is preferably 1,000 ppm or more and 18,000 ppm or less. When the total content of the three atoms involved in the shape control of the calcium-based carbonate compound is within the above range, the shape controllability can be further improved.

In an embodiment, the calcium-based carbonate compound preferably has an average particle diameter by a laser diffraction method of 1.1 µm or more and 12.5 µm or less from the viewpoint of suppressing the shrinkage of the heated surface. In an embodiment, the calcium-based carbonate compound preferably has an average major diameter in scanning electron microscope observation of 0.5 µm or more and 25 µm or less. In an embodiment, the calcium-based carbonate compound preferably has a BET specific surface area of 1 m²/g or more and 10 m²/g or less. By adjusting the shape control factor in the calcium-based carbonate compound, these properties can be satisfied alone or in combination.

In an embodiment, the calcium-based carbonate compound is preferably a synthetic calcium-based carbonate compound. When a synthetic calcium-based carbonate compound that is a reaction product of calcium hydroxide and carbon dioxide gas (carbon dioxide) is used as the calcium-based carbonate compound, carbon dioxide secondarily generated in industrial processes can be reused to contribute to reduction of the emission of carbon dioxide in the entire industrial process.

In one embodiment, since the calcium-based carbonate compound has a high aspect ratio, the calcium-based carbonate compound is suitable as a highly functionalized material for an inorganic molded body.

The present invention relates to, in another embodiment, an inorganic molded body containing the calcium-based carbonate compound.

By applying the calcium-based carbonate compound having a high aspect ratio to an inorganic molded body, the inorganic molded body can have improved strength and fire resistance, and can be enhanced in functionality.

### BRIEF DESCRIPTION OF THE DRAWINGS

FIG. 1 is an SEM photograph of a calcium-based carbonate compound of Example 1-1 of the present invention.
FIG. 2 is an SEM photograph of a calcium-based carbonate compound of Example 1-2 of the present invention.
FIG. 3 is an SEM photograph of a calcium-based carbonate compound of Example 1-3 of the present invention.
FIG. 4 is an SEM photograph of a calcium-based carbonate compound of Example 1-4 of the present invention.
FIG. 5 is an SEM photograph of a calcium-based carbonate compound of Comparative Example 1-1 of the present invention.
FIG. 6 is a partial perspective view schematically showing a heating tester.

### MODE FOR CARRYING OUT THE INVENTION

Hereinafter, a description is made of a calcium-based carbonate compound and an inorganic molded body according to an embodiment of the present invention. The present invention is not limited to these embodiments.

### <Calcium-based carbonate compound>

In the calcium-based carbonate compound, the content of phosphorus atoms is 1,000 ppm or more and 15,000 ppm or less. The content of phosphorus atoms is preferably 1,200 ppm or more and 12,000 ppm or less, more preferably 1,500 ppm or more and 10,000 ppm or less, still more preferably 2,000 ppm or more and 8,000 ppm or less, particularly preferably 2,500 ppm or more and 6,000 ppm or less. By adjusting the content of phosphorus atoms to the predetermined amount, acicular crystal growth or the like of the calcium-based carbonate compound can be promoted, and rapid crystal growth can be suppressed to reduce surface irregularities and porosity in the calcium-based carbonate compound.

In the calcium-based carbonate compound, the content of sulfur atoms is 2,000 ppm or less. The content of sulfur atoms is preferably 1,500 ppm or less, more preferably 1,000 ppm or less, still more preferably 800 ppm or less, particularly preferably 500 ppm or less. The content of sulfur atoms is preferably as low as possible, but may be about 10 ppm. By adjusting the content of sulfur atoms to the predetermined amount, the inhibitory action of acicular crystal growth or the like can be suppressed, and a calcium-based carbonate compound having a desired high aspect ratio can be obtained.

The ratio of the content of sulfur atoms C_{S} (ppm) to the content of phosphorus atoms C_{P} (ppm) (C_{S}/C_{P}) is preferably 0.30 or less, more preferably 0.25 or less, still more preferably 0.20 or less, particularly preferably 0.18 or less. The ratio (C_{S}/C_{P}) is preferably as low as possible, but may be 0.01 or more. By reducing the abundance of sulfur atoms as an inhibitor of acicular crystal growth or the like, a calcium-based carbonate compound having a desired high aspect ratio can be efficiently obtained.

In the calcium-based carbonate compound, the content of silicon atoms is preferably 5,000 ppm or less, more preferably 4,000 ppm or less, still more preferably 3,000 ppm or less, particularly preferably 2,000 ppm or less. The content of the silicon atoms is preferably as low as possible, but may be about 5 ppm. By reducing the abundance of silicon atoms as an inhibitor of acicular crystal growth or the like, a calcium-based carbonate compound having a desired high aspect ratio can be efficiently obtained.

In the calcium-based carbonate compound, the total content of phosphorus atoms, silicon atoms and sulfur atoms is preferably 1,000 ppm or more and 18,000 ppm or less, more preferably 1,500 ppm or more and 16,000 ppm or less, still more preferably 2,000 ppm or more and 14,000 ppm or less, particularly preferably 2,500 ppm or more and 12,000 ppm or less. When the total content of the three atoms involved in the shape control of the calcium-based carbonate compound is within the above range, the shape controllability can be further improved.

The aspect ratio of the average major diameter to the average minor diameter of the calcium-based carbonate compound is 6 or more and 19 or less, preferably 6.5 or more and 17 or less, and more preferably 7 or more and 15 or less. Since the content of phosphorus atoms and sulfur atoms in the calcium-based carbonate compound is within a specific range, the shape can be highly controlled, and a high aspect ratio in the above range can be provided. When the calcium-based carbonate compound is applied to an inorganic molded body, the calcium-based carbonate compound having a high aspect ratio effectively functions as a reinforcing material, so that the strength and fire resistance of the inorganic molded body can be improved.

As the crystal structure of the calcium-based carbonate compound, a calcite type, an aragonite type, or a combination thereof can be suitably employed. From the viewpoint of giving the aspect ratio to the calcium-based carbonate compound, it is preferable to include at least an aragonite type crystal structure.

The average particle diameter of the calcium-based carbonate compound measured by a laser diffraction method is preferably 1.1 µm or more and 12.5 µm or less, more preferably 1.5 µm or more and 12 µm or less, and still more preferably 2 µm or more and 10 µm or less. Thereby, a high aspect ratio can be suitably imparted to the calcium-based carbonate compound, and dispersibility of the calcium-based carbonate compound can be improved.

The average major diameter in scanning electron microscope observation of the calcium-based carbonate compound is preferably 0.5 µm or more and 25 µm or less, more preferably 1 µm or more and 22 µm or less, and still more preferably 2 µm or more and 18 µm or less. Thereby, a high aspect ratio can be suitably imparted to the calcium-based carbonate compound, and the mutual aggregation of the calcium-based carbonate compound or the aggregation of the calcium-based carbonate compound with another component can be suppressed.

The BET specific surface area of the calcium-based carbonate compound is preferably 1 m²/g or more and 10 m²/g or less, more preferably 2 m²/g or more and 9 m²/g or less, and still more preferably 3 m²/g or more and 8 m²/g or less. Thereby, a high aspect ratio can be suitably imparted to the calcium-based carbonate compound, and dispersibility of the calcium-based carbonate compound can be improved.

### (Method for producing calcium-based carbonate compound)

The method for synthesizing the calcium-based carbonate compound is not particularly limited, and a known production method can be employed. Typically, preferable is the carbon dioxide gas method, in which carbon dioxide gas is blown into milk of lime (a slurry in which slaked lime is further excessively added to a saturated aqueous solution of slaked lime) for carbonization. As the carbon dioxide gas used in the carbon dioxide gas method, flue exhaust gas from a lime firing furnace installed in the vicinity of the production plant of the calcium-based carbonate compound, and exhaust gas from a boiler, a refuse incinerator, and the like can be used.

As a method for imparting a predetermined aspect ratio to the calcium-based carbonate compound based on the carbon dioxide gas method, a known method can also be employed. Specific examples of the method include: a method for producing a calcium-based carbonate compound in which the amount of carbon dioxide gas is adjusted in each stage in the carbonation step; a method for producing a calcium-based carbonate compound in which heating is performed in the carbonation stage; a method for producing a calcium-based carbonate compound in which an acicular light calcium-based carbonate compound is used as a seed crystal in a slaked lime slurry, and carbon dioxide gas is introduced into the slurry to grow the seed crystal to a desired particle size through a carbonation reaction; a method for producing a calcium-based carbonate compound in which an aragonite-based acicular calcium-based carbonate compound is added to a slaked lime slurry, and the slurry is stirred with high stirring power to perform a carbonation reaction; a method for producing an aragonite crystal-type calcium-based carbonate compound in which a phosphate compound is added; a method for producing an aragonite crystal-type calcium-based carbonate compound in which a slaked lime slurry prepared with an alkaline aqueous solution is used; and a method for producing an aragonite-type calcium-based carbonate compound in which a slaked lime slurry prepared with water containing magnesium ions is used. By using these methods alone or in combination of two or more, a calcium-based carbonate compound including an aragonite-type crystal structure can be efficiently produced.

Among them, the method for producing the calcium-based carbonate compound having a high aspect ratio is preferably a method for producing a calcium-based carbonate compound in which an acicular synthetic calcium-based carbonate compound having an aragonite-type crystal structure is used as a seed crystal in a slaked lime slurry, and carbon dioxide gas is introduced into the slurry to grow the seed crystal to a desired particle size through a carbonation reaction (hereinafter, also referred to as "seed crystal method").

In the seed crystal method, the blending amount of the seed crystal is preferably 1 part by mass or more and 30 parts by mass or less, more preferably 5 parts by mass or more and 20 parts by mass or less, and still more preferably 8 parts by mass or more and 15 parts by mass or less, based on 100 parts by mass of the slaked lime (in terms of CaO).

In the seed crystal method, the concentration of the carbon dioxide gas varies depending on the type of exhaust gas generated from each combustion engine, and is preferably 1 vol% or more, more preferably 5 vol% or more, and still more preferably 10 vol% or more in consideration of carbonation efficiency. In consideration of carbonation efficiency and production capacity, the flow rate of the carbon dioxide gas is preferably 10 L/min or more and 200 L/min or less, more preferably 30 L/min or more and 150 L/min or less, and still more preferably 60 L/min or more and 120 L/min or less, per 10 kg of the charged raw material CaO content.

In the seed crystal method, the carbonation temperature (the slurry temperature) is preferably 40°C or higher and 100°C or lower, more preferably 50°C or higher and 90°C or lower, and still more preferably 60°C or higher and 80°C or lower.

In the seed crystal method, it is preferable to proceed with carbonation in the presence of a phosphate. The phosphate is not particularly limited, and examples thereof include phosphoric acid, sodium dihydrogen phosphate anhydride, sodium dihydrogen phosphate monohydrate, sodium dihydrogen phosphate dihydrate, disodium hydrogen phosphate 12-hydrate, potassium dihydrogen phosphate anhydride, and ammonium dihydrogen phosphate anhydride.

In the seed crystal method, the blending amount of the phosphate is preferably 1 part by mass or more and 25 parts by mass or less, more preferably 4 parts by mass or more and 18 parts by mass or less, and still more preferably 6 parts by mass or more and 12 parts by mass or less, based on 100 parts by mass of the slaked lime (in terms of CaO). Within such a range, the content of phosphorus atoms in the resulting calcium-based carbonate compound can be within a predetermined range.

The method for adjusting the content of sulfur atoms in the calcium-based carbonate compound within the above range is not particularly limited, and examples thereof include a method in which the amount of a sulfate compound added is reduced or a sulfate compound is not added in order to control the aspect ratio to a predetermined aspect ratio, which sulfate compound would otherwise be added in order to control the aspect ratio so as not to become excessively large (for example, so as not to exceed 20), and a method in which a sulfate compound in the raw material of slaked lime is dissolved and removed by strong alkali.

The method for adjusting the content of silicon atoms in the calcium-based carbonate compound within the above range is not particularly limited, and examples thereof include a method in which the amount of a silica compound added is reduced or a silica compound is not added in order to control the aspect ratio to a predetermined aspect ratio, which silica compound would otherwise be added in order to control the aspect ratio so as not to be excessively large (for example, so as not to exceed 20), and a method in which the mixing amount of fuel-derived impurities that may be contained in slaked lime is adjusted by appropriately selecting a fuel type for calcining limestone. For example, when heavy oil is used as a calcining fuel, impurities (sulfur atoms) derived from sulfuric acid increase, whereas when coal is used as a fuel, impurities (silicon atoms) derived from coal ash increase. Examples of the method for reducing the contents of sulfur atoms and silicon atoms derived from impurities include a method including burning liquefied natural gas (LNG) or hydrogen, and a method including using an electric furnace.

The produced calcium-based carbonate compound may be collected by filtration and dried to form a powder, or may be used as a calcium-based carbonate compound source in a slurry or cake form without undergoing collection by filtration and drying.

In addition to the carbon dioxide gas method, a waste seawater utilization method in which an alkali agent such as magnesium hydroxide is added to waste seawater (residue from which magnesium is removed) generated when slaked lime or the like is added to seawater to produce magnesium hydroxide, and carbon dioxide gas is blown into the waste seawater is also preferable from the viewpoint of waste utilization and reduction of carbon dioxide. Further, as described above, the source of the calcium-based carbonate compound may be a seawater residue mainly including the calcium-based carbonate compound and magnesium hydroxide that are by-products in a process of removing carbonate in seawater in a process of producing magnesium hydroxide from seawater.

### <Application of calcium-based carbonate compound>

The application of the calcium-based carbonate compound is not particularly limited. For the application, for example, the calcium-based carbonate compound is suitable as a highly functionalized material for an inorganic molded body typified by a building material, a filler for a resin, and the like. Hereinafter, a description is made of an aspect in which the calcium-based carbonate compound is used for an inorganic molded body.

### <Inorganic molded body>

The inorganic molded body preferably contains a hydraulic material, a siliceous material, a reinforcing fiber material, and a calcium-based carbonate compound having a predetermined aspect ratio and an oil absorption.

### (Hydraulic material)

Examples of the hydraulic material include cementitious materials, gypsum, lime, slag, and the like. The cementitious materials include commonly used cements such as ordinary Portland cement, early-strength cement, medium heat cement, fly ash cement, blast furnace slag cement, and alumina cement. Examples of the gypsum include anhydrous gypsum, hemihydrate gypsum, and dihydrate gypsum. Examples of the slag include blast furnace slag and converter slag. These hydraulic materials can be used alone or in combination of two or more thereof.

The content of the hydraulic material is preferably 5 mass% or more and 45 mass% or less, more preferably 8 mass% or more and 42 mass% or less, still more preferably 10 mass% or more and 40 mass% or less, based on the total amount of the materials constituting the inorganic molded body. Adjusting the content of the hydraulic material within the above range can improve physical properties such as bending strength and peeling strength of the inorganic molded body, and can suppress an increase in bulk specific gravity of the inorganic molded body and enhance workability at the time of construction, and the like.

### (Siliceous material)

Examples of the siliceous material include materials containing a large amount of SiO₂, such as quartz sand, quartz powder, silica fume, fly ash, diatomaceous earth, layered silicate (e.g. mica, talc, kaolin, bentonite), wollastonite, and lightweight aggregate (for example, fly ash balloon, pearlite, shirasu balloon, glass foam, and the like). These siliceous materials can be used alone or in combination of two or more thereof. Talc, mica, and wollastonite can also be used as a reinforcing fiber material described later.

The content of the siliceous material is preferably 10 mass% or more and 55 mass% or less, more preferably 12 mass% or more and 50 mass% or less, still more preferably 15 mass% or more and 45 mass% or less, based on the total amount of the materials constituting the inorganic molded body. When the content of the siliceous material is within the above range, the bending strength, bulk specific gravity, water absorption rate, dimensional stability, and the like of the inorganic molded body can be adjusted within a desired range. Note that when a lightweight aggregate having a unit volume mass of 0.5 g/cm³ or less such as pearlite, fly ash balloon, or shirasu balloon is blended as the siliceous material, in order to prevent the bulk specific gravity from becoming too light and the strength such as bending strength and peeling strength from becoming weak, it is preferable to use another siliceous material in combination such that the content of the lightweight aggregate is 20 mass% or less based on the total amount of the materials constituting the inorganic molded body.

### (Reinforcing fiber material)

As the reinforcing fiber material, for example, pulps such as softwood pulp, hardwood pulp, pulp obtained by fibrillating these pulps, and pulp obtained by defibrating waste paper, organic reinforcing fiber materials such as vinylon fiber, acrylonitrile fiber, and polypropylene fiber, and inorganic reinforcing fiber materials such as rock wool and glass fiber can be used. These reinforcing fiber materials can be used alone or in combination of two or more thereof.

In order to improve the strength of and impart toughness to the inorganic molded body, the content of the reinforcing fiber material is preferably 2 mass% or more and 30 mass% or less, more preferably 3 mass% or more and 26 mass% or less, still more preferably 4 mass% or more and 22 mass% or less, based on the total amount of the materials constituting the inorganic molded body. Adjusting the content of the reinforcing fiber material within the above range can suppress protrusion of fibers on the surface of the inorganic molded body and improve smoothness while exhibiting a sufficient reinforcing effect. When an inorganic reinforcing fiber material having an average length of 1 mm to 50 mm is blended as the reinforcing fiber material, in order to improve the smoothness of the inorganic molded body, it is preferable to use another reinforcing fiber material in combination such that the content is 10 mass% or less based on the total amount of the materials constituting the inorganic molded body.

### (Calcium-based carbonate compound)

As the calcium-based carbonate compound, the calcium-based carbonate compound described above can be suitably employed.

The content of the calcium-based carbonate compound is preferably 5 mass% or more and 60 mass% or less, more preferably 8 mass% or more and 55 mass% or less, and still more preferably 12 mass% or more and 50 mass% or less based on the total mass of the materials constituting the inorganic molded body. Blending a calcium-based carbonate compound having low thermal conductivity in the content within the above range can improve the strength and fire resistance of an inorganic molded body.

### (Optional components)

In order to impart various functions to the inorganic molded body, in addition to the above materials, various materials such as a resin hollow body, wood pieces, wood powder, resin powder, an antifoaming agent, a coagulant, a water repellent, a thickener (methyl cellulose, hydroxyethyl methyl cellulose, hydroxypropyl methyl cellulose, and the like), and a dispersant can be blended depending on the purpose. In addition, it is also possible to appropriately add a recycled material obtained by grinding an end material or the like generated when processing the inorganic molded body.

The bulk density of the inorganic molded body is preferably 0.7 g/cm³ or more and 1.4 g/cm³ or less, more preferably 0.8 g/cm³ or more and 1.2 g/cm³ or less, still more preferably 0.9 g/cm³ or more and 1.1 g/cm³ or less.

### (Method for producing inorganic molded body)

The method for producing the inorganic molded body according to the present embodiment is not particularly limited, and commonly used papermaking methods, extrusion molding methods, flow-on forming methods, cast molding methods, press (compression) molding, and the like can be used. The inorganic molded body can be obtained by subjecting a green sheet formed by these methods to a pattern forming process performed by press dehydration, embossing, or the like, followed by curing such as normal temperature curing, steam curing, or autoclave curing. Furthermore, drying is performed, and shape processing or coating may be performed as necessary.

### (Application of inorganic molded body)

The application of the inorganic molded body is not particularly limited, and the inorganic molded body can be suitably used as performance maintaining materials, for example, interior and exterior finishing materials such as a building wall material, a floor material, a roof material, various boards, an external decorative member, and a fitting, sealing materials, heat insulating materials, sound absorbing materials, and waterproof materials. The inorganic molded body is preferably a cementitious inorganic molded body containing a cementitious material, and more preferably a calcium silicate formed body. The molded body is more preferably a molded plate.

### EXAMPLES

Hereinafter, a detailed description is made of the present invention with reference to Examples, but the present invention is not limited to the following Examples as long as the present invention does not exceed the gist of the present invention. Measurement and evaluation of physical properties and the like were performed as follows.

### <Evaluation of calcium-based carbonate compound>

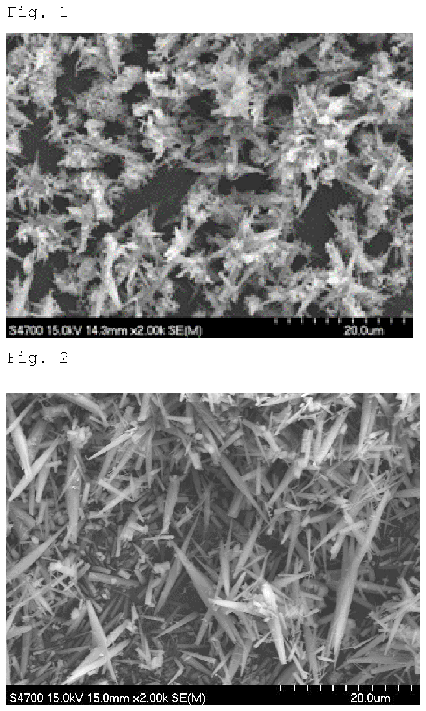

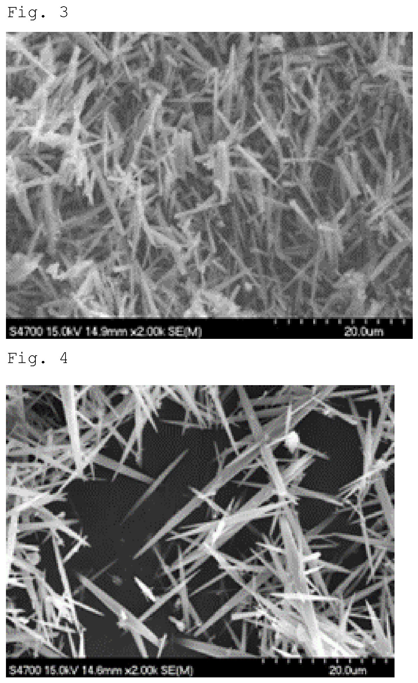

The calcium-based carbonate compounds and the like obtained in Production Examples were subjected to the following analysis. The analysis results are shown in Table 1 and FIGS. 1 to 5.

### (1) Content of phosphorus atoms, sulfur atoms and silicon atoms

### <ICP-AES method>

As a sample, 0.2 g of a calcium-based carbonate compound was weighed and wetted with water. To the wetted compound, 10 mL of hydrochloric acid (a liquid obtained by mixing concentrated hydrochloric acid and water at a volume ratio of 1 : 1) was added with a dispenser, followed by heating for dissolution. After cooling, the solution was transferred to a 250 mL volumetric flask, and water was added to make up the equivalent volume of 250 mL. From this, an aliquot of 20 mL was taken into a 50 mL volumetric flask, and water was added to the equivalent volume of 50 mL to prepare a specimen solution for measurement. On the other hand, an aliquot of 20 mL was taken from the 250 mL made-up aqueous solution into a 50 mL volumetric flask, followed by each arbitrary additional addition of standard solutions of respective elements (phosphorus atom, sulfur atom and silicon atom) to prepare standard solutions for calibration curves having different concentrations. As the standard solutions of the respective elements, standard solutions for atomic absorption at 1,000 ppm (commercially available) were used.

The standard solutions for calibration curve to which the respective elements were additionally added having different concentrations and the specimen solution for measurement were set in an automatic sampler of an inductively coupled plasma atomic emission spectrometer (ICP-AES) ("SPECTROBLUE FMS36" manufactured by Hitachi High-Tech Science Corporation) to measure the amounts (ppm) of phosphorus atoms, sulfur atoms and silicon atoms under the following conditions.

### <Measurement conditions>

High frequency output: 1.4 kW
Carrier gas (humidification) flow rate: 0.9 L/min
Plasma gas flow rate: 13.0 L/min
Auxiliary gas flow rate; 1.0 L/min
Liquid property: aqueous solution
Number of times of integration: 3 times
Sample order: per sample
Measuring method: standard addition method
Weighting of calibration curve: none
Measuring wavelength: phosphorus atom 177.495 nm, sulfur atom 182.034 nm, silicon atom 251.612 nm

### (2) Ratio of content of sulfur atoms C_{S} (ppm) to content of phosphorus atoms C_{P} (ppm) (C_{S}/C_{P})

The ratio (C_{S}/C_{P}) was calculated from the content of sulfur atoms C_{S} (ppm) and the content of phosphorus atoms C_{P} (ppm) determined in the above (1).

### (3) BET specific surface area

The BET specific surface area (m²/g) of a sample powder pretreated at about 130°C for about 30 minutes in a nitrogen gas atmosphere using an 8-unit preheat unit (manufactured by MOUNTECH) was measured by a nitrogen gas adsorption method using Macsorb HM Model-1208 (manufactured by MOUNTECH) as a BET specific surface area measuring apparatus.

### (4) Average particle diameter measured by laser diffraction method

In a 100 mL volume beaker, 50 mL of ethanol was placed, and about 0.2 g of the sample powder was put into the 100 mL volume beaker, followed by ultrasonic treatment (UD-201 manufactured by Tomy Seiko Co., Ltd.) for 3 minutes, to prepare a dispersion. The dispersion was measured using a laser diffraction method-particle size distribution meter (Microtrac HRA Model 9320-X100 manufactured by Nikkiso Co., Ltd.) with a volume-based D₅₀ value as the average particle diameter (µm).

### (4) Calculation of average major diameter, average minor diameter, and aspect ratio by scanning electron microscope observation

A double-sided tape was attached onto an aluminum sample stage, and on the tape the sample powder was applied by tracing with a spatula. After platinum vapor deposition was performed, a particle image of the sample powder was photographed at a magnification of 2000 using a scanning electron microscope (FE-SEM: S-4700 manufactured by Hitachi, Ltd.). FIGS. 1 to 5 show SEM photographs of Examples and Comparative Examples. For each of the obtained SEM photographs, 20 particles in the photograph were randomly selected to determine the average values of the major diameter, minor diameter (diameter length when an axis orthogonal to the major axis was taken at the center of the major axis), and aspect ratio (ratio of major diameter to minor diameter) of the primary particle using image analysis software (Image J).

### <Production of calcium-based carbonate compound>

### [Example 1-1] Calcium-based carbonate compound (aspect ratio: 6.6)

Charged into 50 L of water at 70°C under stirring was 7,000 g of quicklime powder produced by co-firing limestone and coal, followed by slaking for 1 hour to adjust a milk of lime. Into a 220 L volume SUS container with a baffle plate in which 180 L of water was placed in advance, 6,980 g of the milk of lime in terms of CaO, 630 g of aragonite seed crystal powder, and 500 g of disodium hydrogen phosphate 12-hydrate prepared were each charged under stirring to prepare a mixed slurry of raw materials. Thereafter, the temperature was raised to 70°C, and under that temperature, stirring was performed at a rotation speed of 150 rpm using a stirrer equipped with one stage of turbine blades. An exhaust gas extraction pipe was connected to an exhaust outlet of a steam production boiler using LNG as a fuel. Then, the CO₂ concentration was measured with a CO₂ concentration measuring device (XP-3140 manufactured by New Cosmos Electric Co., Ltd.) while the exhaust gas was drawn using a test blower. As a result, the CO₂ concentration was 10 vol%. The exhaust gas was introduced into the 220 L volume SUS container at a speed of 100 L/min using a test blower and reacted for 7 hours. Thereafter, the mixture was filtered, washed with water having a volume of about 5 times the solid content, and dried and ground at 110°C for 24 hours to yield a sample powder of the calcium-based carbonate compound.

### [Example 1-2] Calcium-based carbonate compound (aspect ratio: 8.6)

A sample powder of a calcium-based carbonate compound was obtained by the same operation as in Example 1-1 except that 6,980 g of a commercially available slaked lime powder (excellent industrial slaked lime manufactured by Yoshimi Lime Industry Co., Ltd.) in terms of CaO, 630 g of aragonite seed crystal powder, and 1500 g of disodium hydrogen phosphate 12-hydrate were charged.

### [Example 1-3] Calcium-based carbonate compound (aspect ratio: 10.4)

A sample powder of a calcium-based carbonate compound was obtained by the same operation as in Example 1-1 except that 6,980 g of a commercially available slaked lime powder (excellent industrial slaked lime manufactured by Yoshimi Lime Industry Co., Ltd.) in terms of CaO, 630 g of an aragonite seed crystal powder, and 500 g of disodium hydrogen phosphate 12-hydrate were charged.

### [Example 1-4] Calcium-based carbonate compound (aspect ratio: 18.2)

Charged into 50 L of water at 70 °C under stirring was 7,000 g of commercially available quicklime (excellent granular quicklime manufactured by Yoshimi Lime Industry Co., Ltd.), followed by slaking for 1 hour to adjust a milk of lime. A calcium-based carbonate compound sample powder was obtained by the same operation as in Example 1-1 except that 3,400 g of the milk of lime in terms of CaO, 310 g of the calcium-based carbonate compound sample powder obtained in Example 1-3 as an aragonite seed crystal, and 240 g of disodium hydrogen phosphate 12-hydrate were charged.

### [Comparative Example 1-1] Calcium-based carbonate compound (aspect ratio: 5.2)

A calcium-based carbonate compound sample powder was obtained by the same operation as in Example 1-1 except that 6,980 g of commercially available slaked lime powder (excellent industrial slaked lime manufactured by Yoshimi Lime Industry Co., Ltd.) in terms of CaO, 630 g of an aragonite seed crystal powder, and 500 g of disodium hydrogen phosphate 12-hydrate were charged, and then 125 g of sodium sulfate was further charged.

### [Comparative Example 1-2] Calcium-based carbonate compound (aspect ratio: 5.3)

A sample powder of a calcium-based carbonate compound was obtained by the same operation as in Example 1-1 except that 6,980 g of a commercially available slaked lime powder (excellent industrial slaked lime manufactured by Yoshimi Lime Industry Co., Ltd.) in terms of CaO, 630 g of an aragonite seed crystal powder, and 3,000 g of disodium hydrogen phosphate 12-hydrate were charged.

**[Table 1]**

| | Example 1-1 | Example 1-2 | Example 1-3 | Example 1-4 | Comparative Example 1-1 | Comparative Example 1-2 |
|---|---|---|---|---|---|---|
| Content of phosphorus atoms (ppm) | 1740 | 9700 | 3000 | 3600 | 3900 | 20300 |
| Content of sulfur atoms (ppm) | 300 | 200 | 60 | 70 | 2300 | 200 |
| Content of silicon atoms (ppm) | 1160 | 250 | 30 | 30 | 250 | 220 |
| Total content of phosphorus atoms, sulfur atoms and silicon atoms (ppm) | 3200 | 10150 | 3090 | 3700 | 6450 | 20720 |
| Ratio C_{S}/C_{P} of sulfur atom weight C_{S} (ppm) to phosphorus atom weight C_{P} (ppm) | 0.17 | 0.02 | 0.02 | 0.02 | 0.59 | 0.01 |
| BET Specific surface area (m²/g) | 5.8 | 9.9 | 3.7 | 2.8 | 3.8 | 13.7 |
| Average particle diameter (µm) | 6.6 | 7.2 | 4.1 | 7.3 | 6.0 | 4.1 |
| Average major diameter (µm) | 9.6 | 10.4 | 16.6 | 21.8 | 5.3 | 5.8 |
| Average minor diameter (µm) | 1.4 | 1.2 | 1.6 | 1.2 | 1.0 | 1.1 |
| Aspect ratio (-) | 6.6 | 8.6 | 10.4 | 18.2 | 5.2 | 5.3 |

### <Production of inorganic molded body>

An inorganic molded body was produced by a papermaking method and an extrusion molding method according to the following procedure. The blending amounts of the components used are all indicated as "parts by mass" unless otherwise specified. In the tables below, "-" indicates that the corresponding component was not used.

### [Example 2-1] Production of inorganic molded body by

### papermaking method

Materials shown in Table 2 below were put into a poly container and stirred and mixed to obtain a raw material slurry. As the calcium-based carbonate compound, the calcium-based carbonate compound of Example 1-1 was used. The raw material slurry was dividedly charged into a filter covered with felt, performing suction filtration with a vacuum pump, to prepare a laminate (long side 28 mm × short side 24 mm × thickness 14 mm). The laminate was taken out of the filter and subjected to dehydration pressing. The thickness after pressing was 13 mm. After autoclave curing (curing pressure (gauge pressure): 9 kgf; curing time: 12 hr), the pressed body was dried in a dryer (105°C) for 24 hr. Both surfaces thereof were polished with a sander to adjust the thickness to 12 mm, thereby obtaining an inorganic molded body.

### [Example 2-2] Production of inorganic molded body by papermaking method

An inorganic molded body was obtained in the same manner as in Example 2-1 except that the calcium-based carbonate compound of Example 1-2 was used as the calcium-based carbonate compound.

### [Example 2-3] Production of inorganic molded body by papermaking method

An inorganic molded body was obtained in the same manner as in Example 2-1 except that the calcium-based carbonate compound of Example 1-3 was used as the calcium-based carbonate compound.

### [Example 2-4] Production of inorganic molded body by papermaking method

An inorganic molded body was obtained in the same manner as in Example 2-1 except that the calcium-based carbonate compound of Example 1-4 was used as the calcium-based carbonate compound.

### [Comparative Example 2-1] Production of inorganic molded body by papermaking method

An inorganic molded body was obtained in the same manner as in Example 2-1 except that the calcium-based carbonate compound of Comparative Example 1-1 was used as the calcium-based carbonate compound.

### [Comparative Example 2-2] Production of inorganic molded body by papermaking method

An inorganic molded body was obtained in the same manner as in Example 2-1 except that the calcium-based carbonate compound of Comparative Example 1-2 was used as the calcium-based carbonate compound.

### [Comparative Example 2-3] Production of inorganic molded body by papermaking method

An inorganic molded body was obtained in the same manner as in Example 2-1 except that a calcium-based carbonate compound having an aspect ratio of 25 was used as the calcium-based carbonate compound. However, the calcium-based carbonate compound was broken during molding and could not maintain the original shape, and therefore evaluation was not performed.

### <Evaluation of inorganic molded body>

The inorganic molded bodies produced by a papermaking method in Examples and Comparative Examples were evaluated as follows. The results are shown in Table 2.

### (Bulk density)

The bulk density was measured in accordance with JIS A 5430.

### (Heating test)

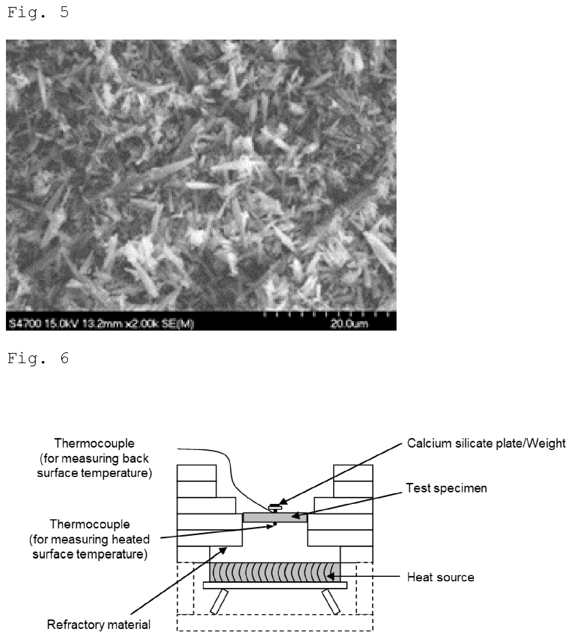

A heating test was performed by the following apparatus and procedure. FIG. 6 is a partial perspective view schematically showing a heating tester. As shown in FIG. 6, to stabilize the temperature at around 900 °C using an electric heater as a heat source, a refractory material was provided from the test specimen to the heat source, by which the temperature of the back surface of the test specimen was successfully measured with a thermocouple. Specifically, as heat source equipment, an electric heater (1.2 kw heater) was fixed such that the distance between the heated surface side of the test specimen and the heat source was about 70 mm.

The test procedure was as follows.
(1) A dummy plate was placed, preheated to 902 °C, and then heated once.
(2) After the heated surface side reached 200 °C or lower, the dummy plate was replaced with a test specimen.
(3) The thermocouple was placed on the center of the back surface (upper surface in the figure) of the test specimen, and a calcium silicate plate (about 30 mm × 70 mm) and a weight were placed for fixing.
(4) Heating is started and left for a predetermined time (45 minutes), and the temperature on the front surface side and the back surface side is recorded in a data logger. During this period, the temperature of the electric heater was set to 902 °C on the heated surface side, and managed by the temperature controller with the lower limit of 900 °C. In addition, the temperature measurement interval of the data logger was set to every 10 seconds, and the data were recorded at this interval.
(5) After completion of the test, the test specimen was taken out, and the following items were measured (the items were also measured before the test).
   - Dimensions: The longitudinal and lateral lengths of the back surface and the heated surface were measured with a caliper. The area (mm²) of the heated surface before and after the test was calculated, and the heated surface shrinkage (%) was determined based on the following formula.
      $Heated surface shrinkage \left(%\right) = \left\{{| S}_{1}-{S}_{0}|/{S}_{0}\right\} \times 100$ (wherein S₀ is the area of the heated surface before the test, and S₁ is the area of the heated surface after the test.)

**[Table 2]**

| | | Example 2-1 | Example 2-2 | Example 2-3 | Example 2-4 | Comparative Example 2-1 | Comparative Example 2-2 |
|---|---|---|---|---|---|---|---|
| Material | Cement | 27 | 27 | 27 | 27 | 27 | 27 |
| | Silica sand | 23 | 23 | 23 | 23 | 23 | 23 |
| | Pulp | 5 | 5 | 5 | 5 | 5 | 5 |
| | Wollastonite | 10 | 10 | 10 | 10 | 10 | 10 |
| | Calcium-based carbonate compound | 35 | 35 | 35 | 35 | 35 | 35 |
| Content of calcium-based carbonate compound | | 35% | 35% | 35% | 35% | 35% | 35% |
| Evaluation | Bulk density (g/cm³) | 0.9 | 0.9 | 0.9 | 0.9 | 0.9 | 0.9 |
| | Heated surface shrinkage (%) | 0.8 | 0.7 | 0.5 | 0.3 | 0.9 | 1.4 |
| | Temperature rise at back surface (K, 12 mm) | 452 | 449 | 450 | 430 | 455 | 451 |

The inorganic molded bodies of Examples were superior to those of Comparative Examples in both shrinkage of the heated surface and temperature rise at the back surface, exhibiting good fire resistance. In addition, the inorganic molded bodies of Examples were not cracked after heating (not shown).

### [Example 3-1] Production of inorganic molded body by extrusion molding method

The materials shown in Table 3 below were charged into an omni mixer, and raw materials were dry-stirred for 3 minutes. As the calcium-based carbonate compound, the calcium-based carbonate compound of Example 1-1 was used. Next, water was added, followed by wet stirring for 2 minutes. The raw materials after the wet stirring were kneaded with an Ishikawa-toki's extruder, and then extrusion molded with the Ishikawa-toki's extruder. In this way, a molded body having a long side of 600 mm × a short side of 190 mm × a thickness of 13 mm was produced. After the molded body was obtained, the molded body was charged into a thermo-hygrostat set at 60 °C/98% to undergo primary curing, and the pressure was further raised to 9 kgf for autoclave curing for 12 hours. Both surfaces of the molded body were polished with a sander to have a thickness of 12 mm, thereby producing an inorganic molded body.

### [Example 3-2] Production of inorganic molded body by extrusion molding method

An inorganic molded body was obtained in the same manner as in Example 3-1 except that the calcium-based carbonate compound of Example 1-2 was used as the calcium-based carbonate compound.

### [Example 3-3] Production of inorganic molded body by extrusion molding method

An inorganic molded body was obtained in the same manner as in Example 3-1 except that the calcium-based carbonate compound of Example 1-3 was used as the calcium-based carbonate compound.

### [Example 3-4] Production of inorganic molded body by extrusion molding method

An inorganic molded body was obtained in the same manner as in Example 3-1 except that the calcium-based carbonate compound of Example 1-4 was used as the calcium-based carbonate compound.

### [Comparative Example 3-1] Production of inorganic molded body by extrusion molding method

An inorganic molded body was obtained in the same manner as in Example 3-1 except that the calcium-based carbonate compound of Comparative Example 1-1 was used as the calcium-based carbonate compound.

### [Comparative Example 3-2] Production of inorganic molded body by extrusion molding method

An inorganic molded body was obtained in the same manner as in Example 3-1 except that the calcium-based carbonate compound of Comparative Example 1-2 was used as the calcium-based carbonate compound.

### [Comparative Example 3-3] Production of inorganic molded body by extrusion molding method

An inorganic molded body was obtained in the same manner as in Example 3-1 except that a calcium-based carbonate compound having an aspect ratio of 25 was used as the calcium-based carbonate compound. However, the calcium-based carbonate compound was broken during molding and could not maintain the original shape, and therefore evaluation was not performed.

### <Evaluation of inorganic molded body>

The inorganic molded bodies produced by an extrusion molding method in Production Examples and Comparative Production Examples were evaluated as follows. The results are shown in Table 3.

### (Bulk density)

The bulk density was measured in accordance with JIS A 5430.

### (Three-point bending test)

A three-point bending test was performed in accordance with JIS A 5430. The result was defined as the strength (N/mm²) of the inorganic cement-based molded body plate.

### (Heating test)

The measurement was performed in the same manner as in the case of the papermaking method, and after completion of the test (5), the test specimen was taken out, and the following items were measured (the items were also measured before the test).
· Warpage:The test specimen was placed on an iron surface plate, and the height of the central portion of each side of the test specimen from the iron surface plate was measured with a thickness gauge to take the average value (mm). The average value was defined as warpage (mm) after heating.

**[Table 3]**

| | | Example 3-1 | Example 3-2 | Example 3-3 | Example 3-4 | Comparative Example 3-1 | Comparative Example 3-2 |
|---|---|---|---|---|---|---|---|
| Material | Cement | 30 | 30 | 30 | 30 | 30 | 30 |
| | Silica stone powder | 17 | 17 | 17 | 17 | 17 | 17 |
| | Wollastonite | 5 | 5 | 5 | 5 | 5 | 5 |
| | Pulp | 8 | 8 | 8 | 8 | 8 | 8 |
| | Methyl cellulose | 1 | 1 | 1 | 1 | 1 | 1 |
| | Fly ash balloon | 9 | 9 | 9 | 9 | 9 | 9 |
| | Calcium-based carbonate compound | 30 | 30 | 30 | 30 | 30 | 30 |
| Content of calcium-based carbonate compound | | 30% | 30% | 30% | 30% | 30% | 30% |
| Evaluation | Bulk density (g/cm³) | 1.0 | 1.0 | 1.1 | 1.0 | 1.1 | 1.0 |
| | Strength (N/mm²) | 10.9 | 11.2 | 11.6 | 11.3 | 10.5 | 11.0 |
| | Heated surface shrinkage (%) | 1.3 | 1.2 | 1.1 | 0.8 | 1.3 | 1.5 |
| | Temperature rise at back surface (K, 12 mm) | 494 | 494 | 494 | 489 | 495 | 493 |
| | Warpage after heating (mm) | 0.7 | 0.5 | 0.5 | 0.0 | 0.8 | 1.3 |

The inorganic molded bodies of Examples were equal to or higher than those of Comparative Examples in all of strength, shrinkage of the heated surface, temperature rise at the back surface, and warpage after heating, exhibiting good strength and fire resistance. In addition, the inorganic molded bodies of Examples were not cracked after heating (not shown).

## Claims

1. A calcium-based carbonate compound, wherein
a content of phosphorus atoms is 1,000 ppm or more and 15,000 ppm or less,
a content of sulfur atoms is 2,000 ppm or less, and
an aspect ratio of an average major diameter to an average minor diameter is 6 or more and 19 or less.

2. The calcium-based carbonate compound according to claim 1, wherein a content of silicon atoms is 5,000 ppm or less.

3. The calcium-based carbonate compound according to claim 2, wherein a total content of phosphorus atoms, silicon atoms and sulfur atoms is 1,000 ppm or more and 18,000 ppm or less.

4. The calcium-based carbonate compound according to claim 1, wherein a ratio of the content of sulfur atoms C_{S} (ppm) to the content of phosphorus atoms C_{P} (ppm) (C_{S}/C_{P}) is 0.30 or less.

5. The calcium-based carbonate compound according to claim 1, having an average particle diameter measured by a laser diffraction method of 1.1 µm or more and 12.5 µm or less.

6. The calcium-based carbonate compound according to claim 1, having an average major diameter in scanning electron microscope observation of 0.5 µm or more and 25 µm or less.

7. The calcium-based carbonate compound according to claim 1, having a BET specific surface area of 1 m²/g or more and 10 m²/g or less.

8. The calcium-based carbonate compound according to claim 1, which is a synthetic calcium-based carbonate compound.

9. The calcium-based carbonate compound according to any one of claims 1 to 8, which is for an inorganic molded body.

10. An inorganic molded body, comprising the calcium-based carbonate compound according to any one of claims 1 to 8.
